# EUROPEAN PATENT APPLICATION

(11) **EP 2 151 721 A1**
(43) Date of publication of application: **10.02.2010**
(21) Application number: 09164388.2
(22) Date of filing: 02.07.2009
(51) Int. Cl.: G03G 15/20

(54) **Light absorbent member, heating device, fixing device and image forming apparatus**

(30) Priority: 08.08.2008 KR 20080078144
(71) Applicant: Samsung Electronics Co., Ltd., Suwon-si, Gyeonggi-do 442-742 (KR)
(72) Inventor: Kim, Dae-hwan, Seoul (KR); Kim, Joo-ho, Gyeonggi-do (KR); Oh, Seung-jin, Seoul (KR); Choi, Sun-rock, Gyeonggi-do (KR); Kim, Woo-kyu, Gyeonggi-do (KR)
(74) Representative: Clark, David James

(57) **Abstract**

Disclosed are a light absorptive member (100), a heating device employing such light absorptive member (100), a fixing device (250) employing such heating device and an image forming apparatus (200) that uses the fixing device (250). The light absorptive member (100) includes nano-rods dispersed therein, and can increase absorption efficiency of a heating device (100), such as, for example, a fixing device (250) that uses a light source as a radiant heat source. This increase is due to surface plasmon resonance that occurs when the wavelength(s) of the light corresponds the peak wavelength(s) of the absorptive rate for the light, based on the aspect ratio(s) of the nano-rods.

## Description

The present invention relates to a light absorbent member having improved heat efficiency, a heating device employing the same, a fixing device employing such heating device and an image forming apparatus that uses the fixing device.

A heating device applies heat to a desired region of a device, and is in wide usage, for example, as a heat source in a fixing device of an image forming apparatus, including, *inter alia*, e.g., an electrophotographic image forming apparatus that employs light in forming electrostatic image on a photosensitive medium.

For example, in such image forming apparatus that uses the electrophotographic method, after charging a photosensitive drum to a substantially uniform potential level, an electrostatic latent image is formed in response to an image signal by exposing the photosensitive drum with light using, for example, a laser scanning unit (LSU). Afterwards, a toner image is formed by supplying the charged toner to the photosensitive drum to develop the electrostatic latent image. So developed toner image is then transferred onto a recording medium. At that point, the toner image transferred onto the recording medium is merely placed on the recording medium, and is not yet fixed on the recording medium, and thus, a fixed toner image is ultimately formed on the recording medium by thermally fixing the toner image by applying heat and pressure onto the toner image. For example, in a fixing device of a roller type, the recording medium on which the toner image had been transferred is allowed to pass through a nip formed by a pressing contact between a heating roller and a pressing roller, during which the toner image placed on the recording medium is heated by the heating roller and is simultaneously pressed by the pressing roller, and thus, the toner image is permanently fixed onto the recording medium. In the preceding example, the heating roller is an example of a heating device, and may include, for example, a metal roller having a cylindrical shape and a heat source, e.g., a halogen lamp, mounted inside the metal roller.

According to an aspect of the present invention, there is provided a light absorbent member which may comprise one or more absorptive coating layers formed above a substrate. The nano-rods may be formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba.

A first one of the plurality of nano-rods may have a first aspect ratio different from a second aspect ratio corresponding to a second one of the plurality of nano-rods.

According to another aspect, a heating device may be provided to include a light source and an absorption member that absorbs light emitted from the light source, the absorption member including an absorptive coating layer having dispersed therein nano-rods. The nano-rods may be formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba.

The absorptive coating layer may comprise a plurality of layers each containing a quantity of the nano-rods therein.

The light emitted by the light source may have a single wavelength. Each of the nano-rods may have an aspect ratio at which a peak of absorbance of the light by the absorptive coating layer occurs at the single wavelength of light emitted from the light source.

Alternatively, the light emitted by the light source may have a plurality of wavelengths, each wavelength of which being within a wavelength range. The nano-rods may have a plurality of aspect ratios each corresponding to a respective corresponding one of a plurality of peak wavelengths at which the absorbance of the light by the nano-rods is at a peak. Each of the peak wavelength may be within the wavelength range.

According to yet another aspect, a fixing device may be provided to include a light source, a heating device and a pressing device. The heating device may be configured to absorb light emitted from the light source, and to supply heat to thermally fix a toner image on a recording medium. The heating device may include an absorptive coating layer having dispersed therein nano-rods. The pressing device may be in a pressing contact with the heating device to thereby form a fixing nip therebetween.

The nano-rods may be formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba.

The absorptive coating layer may comprise a plurality of layers each containing a quantity of the nano-rods therein.

The light emitted by the light source may have a single wavelength. Each of the nano-rods may have an aspect ratio at which a peak of absorbance of the light by the absorptive coating layer occurs at the single wavelength of light emitted from the light source.

Alternatively, the light emitted by the light source may have a plurality of wavelengths, each wavelength of which being within a wavelength range. The nano-rods may have a plurality of aspect ratios each corresponding to a respective corresponding one of a plurality of peak wavelengths at which the absorbance of the light by the nano-rods is at a peak. Each of the peak wavelength may be within the wavelength range.

The heating device may comprise a heating roller having a cylindrical shape.

Alternately, the heating device may comprise a heating belt.

The light source may be disposed external to the heating device. The absorptive coating layer may be provided on an outer portion of the heating device in a direct optical path of the light from the light source.

The absorptive coating layer may comprise the nano-rods dispersed in a releasable medium.

The fixing device may further comprise a releasable layer formed of a releasable material.

The releasable layer may be arranged to cover the absorptive coating layer.

The light source may be disposed inside the heating device. The absorptive coating layer may be disposed on an inner portion of the heating device in an optical path of the light from the light source.

The light source may be disposed inside the heating device. The fixing device may further comprise a thermal guide member that surrounds at least a portion of the light source. The absorptive coating layer may be provided on a surface of the thermal guide member facing the light source.

According to yet another aspect, an image forming apparatus may be provided to comprise a printing unit configured to transfer a toner image onto a recording medium and a fixing device configured to receive, from the printing unit, the recording medium on which the toner image had been transferred, and to fix the toner image on the recording medium. The fixing device may comprise a light source, a heating device and a pressing device. The heating device may be configured to absorb light emitted from the light source, and to supply heat to thermally fix a toner image on a recording medium. The heating device may include an absorptive coating layer having dispersed therein nano-rods. The pressing device may be in a pressing contact with the heating device to thereby form a fixing nip therebetween.

The nano-rods may be formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a schematic drawing of a heating device according to an example embodiment of the present invention;
FIG. 2 a graph showing the variations of wavelengths that correspond to peaks of optical energy absorption rates when the lengths of nano-rods having the same diameter vary;
FIG. 3 is a graph schematically showing nano-rods having different aspect ratios from each other with respect to a wide wavelength range;
FIG. 4 schematically illustrates a heating device according to another example embodiment of the present invention;
FIG. 5 is a schematic drawing of an image forming apparatus according to an example embodiment of the present invention;
FIG. 6 is a schematic drawing of an example of a fixing device usable in the image forming apparatus of FIG. 5;
FIG. 7 schematically illustrates a heating roller according to another example embodiment usable in the fixing device shown in FIG. 6;
FIG. 8 schematically illustrates a heating roller according to yet another example embodiment usable in the fixing device shown in FIG. 6;
FIG. 9 schematically illustrates a heating roller according to even yet another example embodiment usable in the fixing device shown in FIG. 6;
FIG. 10 is a schematic drawing of a fixing device according to another example embodiment that can be applied to the image forming apparatus of FIG. 5;
FIG. 11 is a schematic drawing of a fixing device according to yet another example embodiment usable with the image forming apparatus of FIG. 5;
FIG. 12 is a schematic drawing of a fixing device according to even yet another example embodiment usable the image forming apparatus of FIG. 5; and
FIG. 13 is a schematic drawing of a fixing device according to even still another example embodiment that can be applied to the image forming apparatus of FIG. 5.

Several embodiments will now be described more fully with reference to the accompanying drawings. In the drawings, like reference numerals denote like elements, and the sizes and thicknesses of layers and regions may be exaggerated for clarity. While the various embodiments are described for the purpose of providing a thorough and complete disclosure, can have many different forms, the scope of the disclosure should not be construed as being limited to the embodiments specifically set forth herein. It will also be understood that when a layer is referred to as being "on" another layer or substrate, the layer can be disposed directly on the other layer or substrate, or there could be intervening layers between the layer and the other layers or substrate.

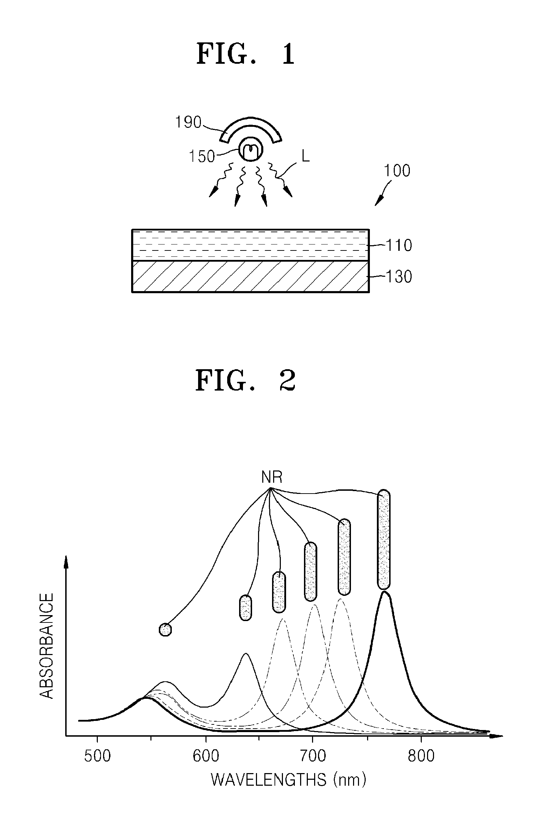

FIG. 1 is a schematic drawing of a heating device according to an example embodiment of the present invention.

Referring to FIG. 1, the heating device may include an absorptive coating member 100 and a light source 150.

The light source 150 irradiates light L to the absorptive coating member 100, and may be, by way of examples, a halogen lamp, a semiconductor laser diode, or the like, however, it should be understood that the light source 150 is not limited those specific examples. A reflection member 190 may further be provided around the light source 150 so as to increase the amount of light directed toward the absorptive coating member 100.

The absorptive coating member 100 may include a substrate 130 and an absorptive coating layer 110 formed on the substrate 130.

The substrate 130, on which the absorptive coating layer 110 is formed, can be any body that can provide base support for the absorptive coating layer 110, and preferably be of a material that can be heated or that transmits heat.

The absorptive coating layer 110 transforms the energy of light L incident to the absorptive coating layer 110 to heat energy, and may include a plurality of nano-rods dispersed or distributed therein. The absorptive coating layer 110 may be formed by mixing a binder, such as, for example, resin, with nano-rods. The material for the binder of the absorptive coating layer 110 may be any coating material in which the nano-rods can be distributed and mixed, and that provides adhesion, and, while resin is described as but one example of such material, the material is not limited resin, nor is it limited to any particular type of resin.

For example, a fluorine based resin such as, e.g., Teflon™, may also be used as the binder.

Nano-rods are bar shaped structures having a nano size, and may have a length that ranges from a few nm to a few hundred nm. It is known that a surface plasmon resonance (SPR) phenomenon occurs at a boundary between a conventional dielectric material that has a positive dielectric characteristic and a material having a negative dielectric characteristic when the conventional dielectric material that has a positive dielectric characteristic and the material having a negative dielectric characteristic contact each other. Also it is known that the SPR is generated on a metal having a high negative dielectric characteristic. The nano-rods used in the current embodiment may be formed of a metal exhibiting the SPR phenomenon. For example, the nano-rods may be formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba. The SPR phenomenon in general is known in the art, and thus, for the sake of brevity a detailed description thereof will be omitted.

When a SPR is generated on the nano-rods, the reflection and dispersion of light incident on the nano-rods are repressed, and the absorption rate of optical energy of the nano-rods reaches a maximum, and thus, a photo-thermal conversion of optical energy may be achieved. The wavelength of light that generates the SPR may vary according to the aspect ratio of the nano-rods. That is, the wavelength at which the absorption rate is at its maximum can be changed by varying the aspect ratio of the nano-rods.

FIG. 2 is a graph showing the variations of wavelengths that correspond to peaks of optical energy absorption rates with respect to the variation of the lengths of nano-rods having the same diameter. Referring to FIG. 2, as the aspect ratio of the nano-rods NR increases, the wavelengths that correspond to peaks of the optical energy absorption rate are gradually increased. The practical values of the aspect ratio of the nano-rods NR and the wavelengths of light that causes the SPR phenomenon may vary according to the practical material of the metal used to form the nano-rods NR.

Referring back to FIG. 1, if the light source 150, such as a semiconductor laser diode, emits light L having a predetermined wavelength, nano-rods NR having an aspect ratio, at which the wavelength of light L emitted from the light source 150 is the peak wavelength of an absorption spectrum of the nano-rods NR, can be used.

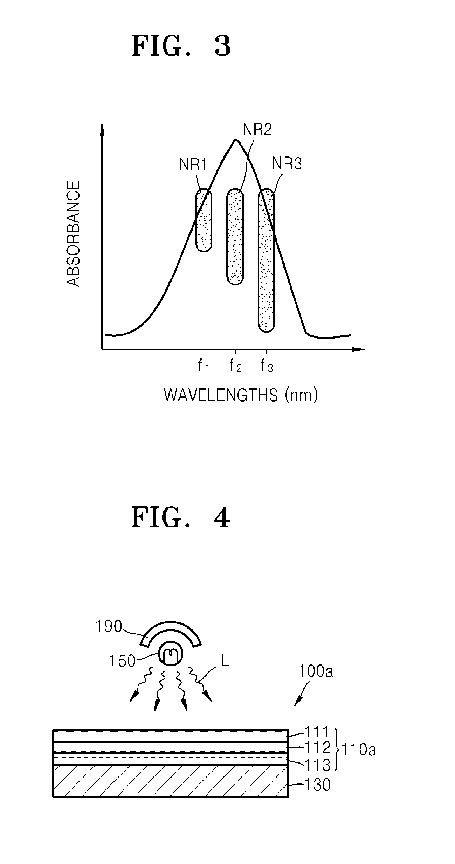

If a broadband light source, such as a halogen lamp, that emits a light L of wider range of wavelengths is used as the light source 150, the nano-rods NR may be provided to have various aspect ratios. For example, as depicted in FIG. 3, the respective aspect ratio of the nano-rods NR1, NR2, and NR3 may be set so that the peak wavelength of the absorption spectrum lies within the wavelength band of light L emitted from the light source 150. That is, if light L emitted from the light source 150 has a wide wavelength band including wavelengths f1, f2, and f3, nano-rods NR1, NR2, and NR3 having aspect ratios respectively corresponding to the wavelengths f1, f2, and f3 included in the wavelength band can be selected. According to an embodiment, the wavelengths f1, f2, and f3 can be selected near the center wavelength band of light L emitted from the light source 150. In FIG. 3, nano-rods NR1, NR2, and NR3 respectively corresponding to three wavelengths are depicted, however, the wavelength band of light L can be further densely packed and covered by selecting nano-rods corresponding to respective dense wavelengths. In this way, since the nano-rods NR1, NR2, and NR3 have various aspect ratios, the wavelength band of light L incident to the nano-rods NR1, NR2, and NR3 can be densely packed and covered, and thus, it may be possible to further improve the optical energy absorption efficiency.

FIG. 4 illustrates another example of a heating device according to another embodiment.

Referring to FIG. 4, an absorptive coating member 100a may be substantially identical to the absorptive coating member 100 of FIG. 1, except that an absorptive coating layer 110a of the absorptive coating member 100a may include a plurality of layers 111, 112, and 113. For sake of brevity, detailed description of like elements previously described are not repeated.

A SPR phenomenon depends on the wavelength and polarization of the incident light L, and may include transverse SPR and longitudinal SPR, and thus, the peaks of the absorption spectrum may vary along the axial direction of the nano-rods NR. Therefore, the possibility of generating the SPR phenomenon due to incident light L can be increased by provision of the multiple layers. Furthermore, according to an embodiment, if the light source 150 emits light L having a wide wavelength band, nano-rods NR of different aspect ratios may be respectively dispersed in each of the layers 111, 112 and 113 of the absorptive coating layer 110a.

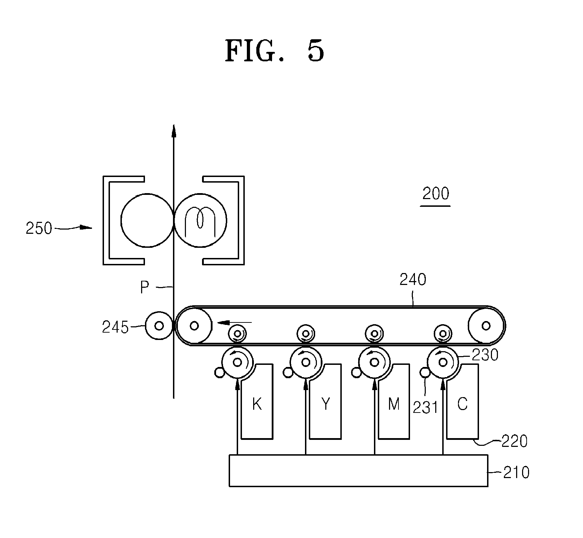

FIG. 5 is a schematic drawing of an image forming apparatus 200 according to an embodiment of the present disclosure.

Referring to FIG. 5, the image forming apparatus 200 may include an optical scanning unit 210, a developing unit 220, a photosensitive drum 230, a charge roller 231, an intermediate transferring belt 240, a transferring roller 245, and a fixing device 250.

The optical scanning unit 210 scans light modulated according to image information onto the photosensitive drum 230. The photosensitive drum 230 is an example of photo-sensitive medium, and may be formed by, for example, providing a photosensitive layer having a predetermined thickness on the outer circumference of a cylindrical metal pipe. The resulting outer circumferential surface of the photosensitive drum 230 corresponds to the surface to be scanned, and on which light scanned by the optical scanning unit 210 is focused. Alternatively, a photosensitive medium having, e.g., a belt shape, can be used.

The charge roller 231 charges the surface of the photosensitive drum 230 to a uniform potential while rotating in contact with the photosensitive drum 230 by applying a charge bias Vc to the charge roller 231. It should be noted that it would be readily apparent to one skilled in the art that other types of charging device, such as, for example, a corona type charger (not shown) can alternatively be used instead of the charge roller 231. The uniformly charged photosensitive drum surface is scanned and thus exposed by the light from the optical scanning unit 210, forming as a result electrostatic latent images on the photosensitive drum surface.

Toner stored in the developing unit 220 migrates to the photosensitive drum 230 due to a developing bias applied between the developing unit 220 and the photosensitive drum 230, and thereby develops the electrostatic latent image into a visible toner image. The toner image formed on the photosensitive drum 230 is transferred to the intermediate transferring belt 240. The toner image is transferred to a recording medium P that is conveyed between the transferring roller 245 and the intermediate transferring belt 240 due to a transferring bias applied to the transferring roller 245. The toner image transferred to the recording medium P receives heat and pressure from the fixing device 250 in order for the toner image to be fixed on the recording medium P, at which point the image forming operation is completed.

In order to print a color image, the optical scanning unit 210, the developing units 220, and the photosensitive drums 230 may be provided for each color of toner being used. For example, the optical scanning unit 210 scans four lights onto four photosensitive drums 230.

In the photosensitive drums 230, electrostatic latent images corresponding to black K, magenta M, yellow Y, and cyan C are respectively formed. The four developing units 220 supply color toner of black K, magenta M, yellow Y, and cyan C to the photosensitive drums 230 to form black K, magenta M, yellow Y, and cyan C toner images, respectively. The toner images of black K, magenta M, yellow Y, and cyan C are transferred to the intermediate transferring belt 240 in a manner overlapping one another, and subsequently the resulting overlapped toner images are transferred to the recording medium P.

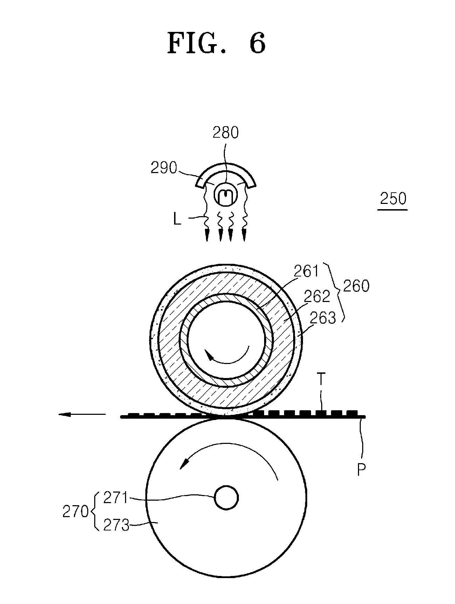

FIG. 6 is a schematic drawing of a fixing device 250 according to an embodiment that is usable in the image forming apparatus 200 of FIG. 5.

Referring to FIG. 6, the fixing device 250 may include a heating roller 260, a pressing roller 270, and a light source 280.

The heating roller 260 according to the embodiment shown is a cylindrical-shaped member that can rotate about an axis of the heating roller 260, and may include an inner tube 261, an elastic layer 262 and an absorptive coating layer 263.

The inner tube 261 supports an outer portion of the heating roller 260, functions as a rotation axis, and can be a core pipe formed of a metal, for example, iron, stainless steel, aluminum, copper, or an alloy of these metals, or ceramic or fiber reinforced metal (FRM). While in the above description, the fixing device 250 is described to include the inner tube 261; however, the present disclosure is not limited thereto, and contemplates inner core structure for the heating roller other than the open tubular shape, for example, a shaft having a solid bar of cylindrical or non-cylindrical shape.

The elastic layer 262 may be formed on the outer circumference of the inner tube 261, and may be formed of silicon rubber or fluorine rubber. The silicon rubber may be room temperature vulcanizing (RTV) silicon rubber or high temperature vulcanizing (HTV) silicon rubber, and more specifically, can be polydimethyl silicon rubber, metal vinyl silicon rubber, metal phenyl silicon rubber, or fluoro silicon rubber, for example.

A plurality of nano-rods are dispersed in the absorptive coating layer 263. The absorptive coating layer 263 can be formed by mixing the nano-rods with a binder such as, e.g., resin.

The absorptive coating layer 263 may be substantially identical to the absorptive coating layer 110 described with reference to FIG. 1, and a duplicative description thereof is not necessary, and thus will not be repeated.

The binder for nano-rods may be a releasable resin such as fluorine rubber, silicon rubber, fluorine resin, or the like. According to a specific embodiment, for example, the absorptive coating layer 263 may be formed by mixing in nano-rods with Teflon™ material. If a releasable resin is used as the binder for nano-rods, the heating roller 260 can be more readily detachable from the recording medium P during the fixing process.

As described above, the nano-rods generate a SPR due to light incident to the nano-rods, and due to the SPR phenomenon, a photo-thermal conversion of photo energy can be achieved.

The pressing roller 270 is a cylindrical-shaped member that can rotate about an axis of the pressing roller 270, has a structure in which a heat-resistant elastic layer 273 such as, e.g., silicon rubber is provided to surround the circumference of a metal bar 271. A fixing nip may be formed between the pressing roller 270 and the heating roller 260. As illustrated in FIG. 6, the heat provided from the heating roller 260 and pressure between the pressing roller 270 and the heating roller 260 fix the toner image T, which is formed on the recording medium P that passes through the fixing nip, on the recording medium P.

The light source 280 may emit radiant heat, and may be a halogen lamp, for example. The fixing device 250 may further includes a reflection member 290 that directs light emitted from the light source 280 toward the heating roller 260.

According to an embodiment, the light source 280 may be located at a location separate from the heating roller 260, and may thus be able to directly irradiate heat onto an external circumference of the heating roller 260. In this way, since the radiation heat is directly irradiated onto the outer circumference of the heating roller 260, which is the outer circumference of absorptive coating layer 263, the surface temperature of the heating roller 260 can be increased rapidly. Since the surface temperature of the heating roller 260 could be increased rapidly to the fixing temperature, for example, 180 to 200°C, the first page out time (FPOT), which is the measure of time required for the first page of a printing medium to output during a printing process, can be reduced, and the overall printing speed can thus be increased.

In the case that a halogen lamp is used as the light source 280, light emitted from the light source 280 has a relatively wide wavelength band. Thus, the optical energy absorption rate can be effectively increased by occurrences of the SPR over the entire wavelength band of light emitted from the light source 280 by mixing the nano-rods having a plurality of aspect ratios in the absorptive coating layer 263, so that, as described above, the peak wavelength of the absorption spectrum of the nano-rods can lie in the wavelength band of light emitted from the halogen lamp.

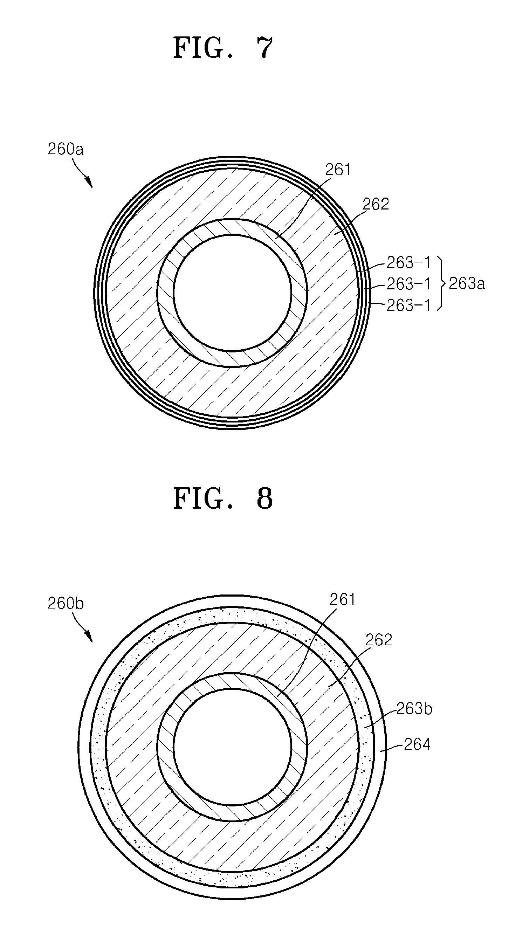

While, in the preceding examples, the nano-rods having a plurality of aspect ratios were described as being dispersed in a single absorptive coating layer 263, the absorptive coating layer 263 is not so limited, and, as depicted in FIG. 7, an absorptive coating layer 263a may include a plurality of layers. When the absorptive coating layer 263a is formed with the plurality of layers as shown, the possibility of generating a SPR from the incident light can be further increased. Furthermore, it is also contemplated that the absorptive coating layer 263a may be formed by respectively dispersing nano-rods having different aspect ratios from each other in each of the layers 263-1, 263-2, and 263-3 of the absorptive coating layer 263a.

Also, while, in the preceding descriptions, an absorptive coating layer 263a formed of a releasable resin, such as, e.g., Teflon^{™}, was described as one example; however, such descriptions should not be construed as limiting the present disclosure to such specific example of the absorptive coating layer 263a. For example, FIG. 8 illustrates an alternative embodiment of the heating roller 260b usable with the fixing device 250 of FIG. 6, where the heating roller 260b is illustrated to include an absorptive coating layer 263b that may be formed using a conventional binder, on the outer circumference of which a releasable layer 264 may be formed. In this example, the releasable layer 264 may be formed of, e.g., a transparent releasable resin such as, e.g., Teflon^{™}.

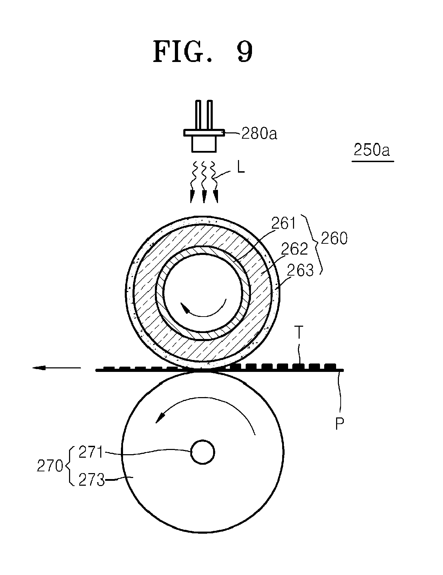

Furthermore, while, in some of the embodiments above, employing a broadband light source such as a halogen lamp having a wide wavelength band of light was described by way of an example; however, the light source is not so limited. For example, illustrated in FIG. 9 is another alternative embodiment of the fixing device. According to the embodiment, a fixing device 250a may employ a light source, such as, for example, a semiconductor laser diode, having a single wavelength as the light source 280a. In this configuration, nano-rods having a uniform aspect ratio that correspond to the wavelength of light L emitted from the light source 280a may alternatively be dispersed in the absorptive coating layer 263.

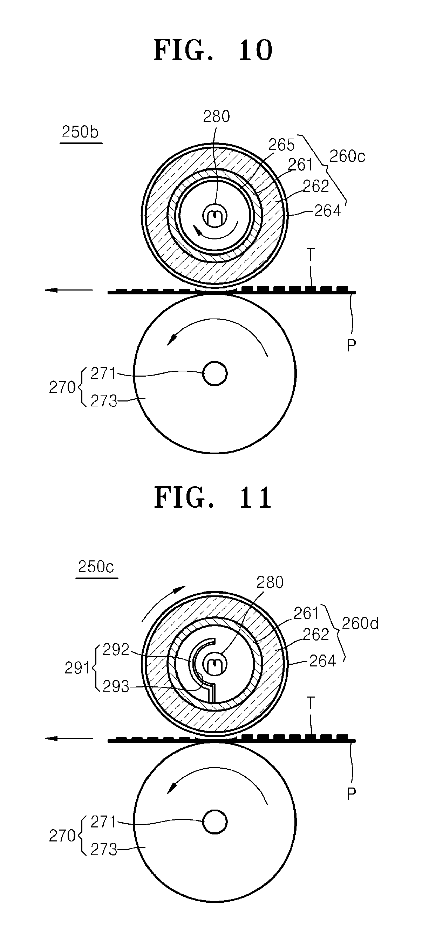

FIG. 10 is a schematic drawing of a fixing device 250b according to another embodiment that can be employed the image forming apparatus 200 of FIG. 5.

Referring to FIG. 10, the fixing device 250b may include a heating roller 260c, a pressing roller 270 and a light source 280. Like reference numerals are used to indicate substantially similar elements as those previously described, for example, in reference to FIG. 6, and a detailed description of the similar elements will not be repeated.

According to the embodiment illustrated in FIG. 10, the light source 280 may be mounted in the inner portion of the heating roller 260c.

For this example, a tubular shaped core pipe is employed as the inner tube 261 of the heating roller 260c. Since the light source 280 is mounted inside the inner tube 261, an absorptive coating layer 265 is provided on the inner circumference of the inner tube 261 to directly absorb light emitted from the light source 280.

The absorptive coating layer 265 may be formed in a single layer or multiple layers. Also, nano-rods dispersed in the absorptive coating layer 265 may have a single aspect ratio or a plurality of aspect ratios according to the wave length of light source 280 as previously described.

FIG. 11 illustrates yet another alternative embodiment of the fixing device. As shown in FIG. 11, a fixing device 250c may include inside the heating roller 260d a thermal guide member 291, which surrounds a portion of the light source 280.

The heating roller 260d may include an inner tube 261, an elastic layer 262, and a releasable layer 264. The heating roller 260d is substantially identical to the heating roller 260c described with reference to FIG. 10, except that the heating roller 260d does not include the absorptive coating layer 265.

The thermal guide member 291 may include a supporter 292 and an absorptive coating layer 293 formed on a surface of the supporter 292 facing the light source 280. The absorptive coating layer 293 in which a plurality of nano-rods are dispersed, can be formed by mixing the nano-rods with a binder such as, e.g., resin. The absorptive coating layer 293 is substantially identical to the absorptive coating layer 110 described with reference to FIG. 1, and thus, a detailed description thereof will not be repeated. The supporter 292 may be formed of a metal having thermal conductivity in order to transfer converted optical energy, that is, the heat absorbed in the absorptive coating layer 293. An end of the thermal guide member 291 contacts an inner circumference of the heating roller 261 to transfer heat to the heating roller 260d from the light source 280. According to an embodiment, the location where the thermal guide member 291 contacts the inner circumference of the heating roller 260d may be near the location where the fixing nip is formed.

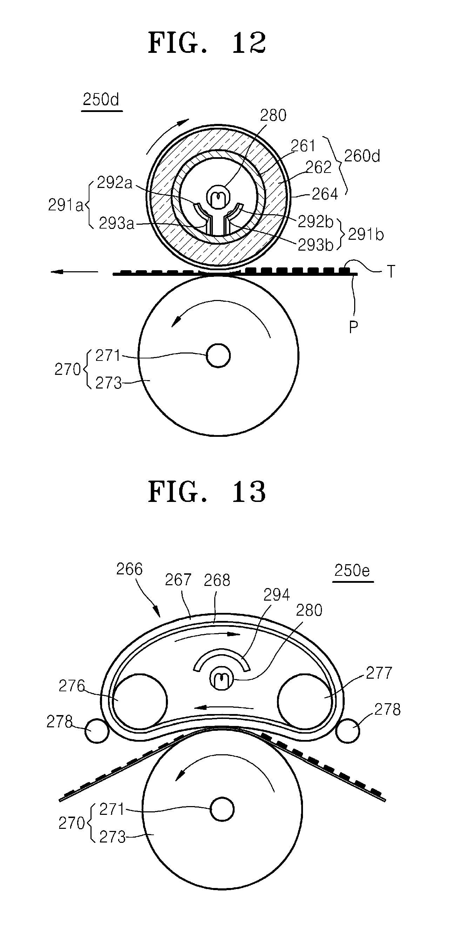

The thermal guide member 291 may entirely or partially surround the light source 280. In the embodiment shown in FIG. 12, the thermal guide member 291 surrounds the light source 280 partially, and the light source 280 directly heats the inner-surface of an upstream portion of the heating roller 260d where a recording medium P enters. In this way, the upstream portion of the heating roller 260d where the recording medium P enters is preheated by the direct irradiation from the light source 280 while the position of the heating roller 260d near the fixing nip portion is heated with an increased intensity by the thermal guide member 291, and thus the thermal efficiency of the fixing device 250c can be increased.

While in the preceding embodiment, an absorptive coating layer was not formed on the inner circumference of the heating roller 260d, in an alternative embodiment, however, the absorptive efficiency can be increased further by additionally forming an absorptive coating layer on the inner circumference of the heating roller 260d.

FIG. 12 illustrates another embodiment of the fixing device. Referring to FIG. 12, a fixing device 250d may be substantially identical to the fixing device 250c of FIG. 11, except that the fixing device 250d includes a pair of thermal guide members 291a and 291b.

The pair of thermal guide members 291a and 291b respectively include supporters 292a and 292b and absorptive coating layers 293a and 293b provided on the surfaces of the supporters 292a and 292b facing the light source 280. The pair of thermal guide members 291a and 291b are formed inside the heating roller 260d near the fixing nip, and thus, a more intensive heat can be applied in the vicinity of the fixing nip of the heating roller 260d.

FIG. 13 is a schematic drawing of a fixing device 250e according to yet another embodiment that can be applied to the image forming apparatus 200 of FIG. 5.

The fixing device 250e may include a heating belt 266, a pressing roller 270, and a light source 280.

In the embodiments previously described, heating rollers were employed as the heating member. However, according to the embodiment shown in FIG. 13, the heating belt 266 is employed as the heating member.

The heating belt 266 has a length greater than the width of a recording medium P, and is a member having a roughly thin cylindrical shape when no external force is applied. A driving roller 276 and a guide roller 277 are provided in the heating belt 266, and pinch rollers 278 are provided on the outer portion of the heating belt 266. The driving roller 276 and the guide roller 277 together with the corresponding respective pinch rollers 278 hold the heating belt 266 in place.

In the heating belt 266, an absorptive coating layer 268 may be formed on the inner circumference of a base layer 267, which may be formed of a metal or a thermal resistant resin film having a thickness of, for example, a few tens of µm to 150 µm The absorptive coating layer 268 is formed by mixing a plurality of nano-rods in a binder such as, e.g., resin, and is substantially identical to the absorptive coating layer 110 described with reference to FIG. 1, and thus, a detailed description thereof will not be repeated. An elastic layer (not shown), formed of thermal resistant rubber, such as, e.g., silicon, may additionally be applied to the outer circumference of the base layer 267. Furthermore, a releasable layer formed of, e.g., Teflon^{™}, may further be applied to the surface of the elastic layer.

The inner surface of the heating belt 266 is in a frictional contact with the driving roller 276 so as to be driven by the driving roller 276 that rotates about the axis of the driving roller 276. Since the guide roller 277 supports the other end of the heating belt 266 so as to maintain a level of tension in the heating belt 266 near the fixing nip.

The fixing device 250e may further include a reflection member 294. The reflection member 294 directs the light, that is, the radiation of heat, emitted from the light source 280 towards the direction of the fixing nip of the heating belt 266.

While the light source 280 is described as being provided inside the heating belt 266, the light source 280 may alternatively be installed on the outside of the heating belt 266 similar to the embodiment described with reference to FIG. 6. In that configuration, the absorptive coating layer 268 may be provided on the external circumference of the heating belt 266.

Also, in alternative embodiments, one or more thermal guide members as described in reference to FIGS. 11 and 12 may be provided in lieu of the reflection member 294.

According to afore-described various aspects and embodiments, thermal efficiency of a fixing device may be improved by the use of an absorptive coating layer. A reduction of the FPOT and an improvement in the overall printing speed are also possible.

An absorptive coating layer according to the various embodiments described herein and a heating device that employs the same can be used in various apparatuses, other than a fixing device, that use radiant heat sources. For example, the absorptive coating layer can be used in an ambient heating device, e.g., for heating up a room. Many other applications are also possible. For example, an absorptive coating layer can be used to locally heat a small area by irradiating light onto the nano-rods containing material. An apparatus that can locally heat a small area, can have an application, for example, in installation of an electronic element on a printed circuit substrate, in medical treatments, for example, to treat a tumor by applying heat locally to the tumor after planting a nano-rods containing material in the tumor.

While a light absorbent member, a heating device, a fixing device, and an image forming apparatus that uses the fixing device, according to various aspects of the present disclosure, have been particularly shown and described with reference to embodiments thereof, it will be understood by those of ordinary skill in the art that various changes in features, forms and details may be made therein without departing from the scope of the present disclosure as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A light absorbent member, comprising:
one or more absorptive coating layers (110) formed above a substrate (130), the each of the one or more absorptive (110) coating layers having dispersed therein a plurality of nano-rods.

2. The light absorbent member of claim 1, wherein each of the plurality of nano-rods is formed of at least one metal selected from the group consisting of Ag, Au, Pt, Pd, Fe, Ni, Al, Sb, W, Tb, Dy, Gd, Eu, Nd, Pr, Sr, Mg, Cu, Zn, Co, Mn, Cr, V, Mo, Zr, and Ba.

3. A heating device, comprising:
a light source (150); and
an light absorption member as claimed in claim 1 or 2, the absorption member arranged to absorb light emitted from the light source (150).

4. The heating device of claim 3, wherein the absorptive coating layer (110) comprises a single of layer containing a quantity of the nano-rods therein.

5. The heating device of claim 3, wherein the absorptive coating layer (110a) comprises a plurality of layers (111, 112, 113) each containing a quantity of the nano-rods therein.

6. The heating device of any one of claims 3 through 5, wherein the light emitted by the light source (150) has a single wavelength, and wherein each of the nano-rods has an aspect ratio at which a peak of absorbance of the light by the absorptive coating (110, 110a) layer occurs at the single wavelength of light emitted from the light source (150).

7. The heating device of any one of claims 3 through 5, wherein the light emitted by the light source (150) has a plurality of wavelengths, each wavelength of which being within a wavelength range, and
wherein the nano-rods have a plurality of aspect ratios each corresponding to a respective corresponding one of a plurality of peak wavelengths at which the absorbance of the light by the nano-rods is at a peak, each of the peak wavelength being within the wavelength range.

8. A fixing device, comprising:
a light source (280);
a heating device as claimed in any one of claims 3 through 7, the heating device being configured to absorb light emitted from the light source (280), and to supply heat to thermally fix a toner image (T) on a recording medium (P), the heating device including an absorptive coating layer (263) having dispersed therein nano-rods; and
a pressing device (270) in a pressing contact with the heating device to thereby form a fixing nip therebetween.

9. The fixing device of claim 8, wherein the heating device comprises a heating roller (260) having a cylindrical shape or a heating belt (266).

10. The fixing device of claim 8 or 9, wherein the absorptive coating layer (263) comprises the nano-rods dispersed in a releasable medium.

11. The fixing device of any one of claim 8, 9 or 10, further comprising:
a releasable layer (264) formed of a releasable material, the releasable layer being arranged to cover the absorptive coating layer (263).

12. The fixing device of any one of claims 8 through 11, wherein the light source (280) is disposed external to the heating device, the absorptive coating layer (263) being provided on an outer portion of the heating device in a direct optical path of the light from the light source (280).

13. The fixing device of any one of claims 8 through 11, wherein the light source (280) is disposed inside the heating device, the absorptive coating layer (265) being disposed on an inner portion of the heating device in an optical path of the light from the light source (280).

14. The fixing device of any one of claims 8 through 11, further comprising:
a thermal guide member (291) that surrounds at least a portion of the light source (280), the absorptive coating layer (293) being provided on a surface of the thermal guide member (291) facing the light source (280).

15. An image forming apparatus, comprising:
a printing unit configured to transfer a toner image onto a recording medium (P); and
a fixing device (250) as claimed in any one of claims 8 through 14, the fixing device (250) being configured to receive, from the printing unit, the recording medium (P) on which the toner image had been transferred, and to fix the toner image on the recording medium (P).
